# EUROPÄISCHE PATENTANMELDUNG

(11) **EP 2 320 053 A2**
(43) Veröffentlichungstag der Anmeldung: **11.05.2011**
(21) Anmeldenummer: 10006378.3
(22) Anmeldetag: 19.06.2010
(51) Int. Cl.: F02D 41/00, F02D 35/02, F02D 41/24, F02D 41/40

(54) **Verfahren zum Betreiben einer Brennkraftmaschine mit unterschiedlichen Kraftstoffarten bzw. Kraftstoffqualitäten**

(30) Priorität: 06.11.2009 DE 102009052224
(71) Anmelder: Volkswagen Aktiengesellschaft, 38436 Wolfsburg (DE)
(72) Erfinder: Jeschke, Jens, Dr., 38106 Braunschweig (DE); Lang, Thomas, 38554 Weyhausen (DE); Nitzke, Hans-Georg, 38547 Wettmershagen (DE)

(57) **Zusammenfassung**

Die Erfindung betrifft ein Verfahren zum Betreiben einer Brennkraftmaschine mit mindestens einem Arbeitszylinder, insbesondere eines Dieselmotors, wobei dem mindestens einen Arbeitszylinder Kraftstoff zugeführt wird, sowie eine Kraftstoffart und/oder eine Kraftstoffqualität des momentan zugeführten Kraftstoffes bestimmt wird, in einer bevorzugten Ausführungsform mit Hilfe eines Zylinderdrucksignals. Hierbei wird in Abhängigkeit von der bestimmten Kraftstoffart und/oder Kraftstoffqualität mindestens ein Parameter zum Zuführen des Kraftstoffes verändert.

## Beschreibung

Die Erfindung betrifft ein Verfahren zum Betreiben einer Brennkraftmaschine mit mindestens einem Arbeitszylinder, insbesondere eines Dieselmotors, wobei dem mindestens einen Arbeitszylinder Kraftstoff zugeführt wird, sowie eine Kraftstoffart und/oder eine Kraftstoffqualität des momentan zugeführten Kraftstoffes bestimmt wird, gemäß dem Oberbegriff des Patentanspruchs 1.

Die Einhaltung zukünftiger Emissionsgrenzwerte bei möglichst geringem Kraftstoffverbrauch und gleichzeitig hohem Kundenkomfort über die Laufzeit eines Fahrzeuges bzw. eines Verbrennungsmotors stellt besonders hohe Anforderungen an die Regelung der Verbrennungsmotoren. So können unterschiedliche Kraftstoffqualitäten, unterschiedliche Kraftstoffsorten, wie beispielsweise SunFuel, Biokraftstoffe, Naphtha, sowie Toleranzen und Alterungen im Verbrennungsmotor zu erhöhten Schadstoffemissionen sowie schlechterem Kraftstoffverbrauch oder Einbußen im Fahrkomfort führen.

Aus der gattungsgemäßen DE 10 2007 027 483 A1 ist ein Verfahren zum Ermitteln eines Qualitätsmerkmals eines Dieselkraftstoffes bekannt. Hierbei wird aus einem Zylinderdruckverlauf eine Prozessgröße der Verbrennung, wie beispielsweise ein Abstand zwischen einem Einspritzzeitpunkt und einem Verbrennungsschwerpunkt, ermittelt, die die Kraftstoffqualität charakterisiert. Es soll eine dauerhafte Überwachung der Kraftstoffqualität erzielt werden. Eine Beeinflussung der Verbrennung in Abhängigkeit von der Kraftstoffqualität ist nicht vorgesehen.

Aus der DE 10 2007 027 484 A1 ist ein Verfahren zum Ermitteln des Durchbrennverhaltens eines Dieselkraftstoffes bekannt. Hierbei wird aus einem Zylinderdruckverlauf mindestens eines Zylinders eine Prozessgröße der Verbrennung ermittelt, die das Durchbrennverhalten charakterisiert. Die Ermittlung der Durchbrenngeschwindigkeit ermöglicht eine Anpassung von Betriebsparametern, beispielsweise durch Kennfeldumschaltung, Änderung von konstanten Parametern oder dergleichen, zum Ausgleich von unterschiedlichen Durchbrennverhalten. Unterschiedliche Durchbrennverhalten der Kraftstoffe bei unterschiedlichen Tankfüllungen eines Kraftfahrzeugs könne so durch den Fahrer unbemerkt ausgeglichen werden. Eine Bestimmung von Kraftstoffart bzw. Kraftstoffqualität ist nicht vorgesehen. Es wird im Gegenteil immer davon ausgegangen, dass es sich um Dieselkraftstoff handelt.

Der Erfindung liegt die Aufgabe zugrunde, ein Verfahren der o.g. Art dahingehend zu verbessern, dass eine Brennkraftmaschine auf einfache Weise mit unterschiedlichen Kraftstoffarten bzw. Kraftstoffqualitäten betrieben werden kann.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in Abhängigkeit von der bestimmten Kraftstoffart und/oder Kraftstoffqualität mindestens ein Parameter zum Zuführen des Kraftstoffes verändert wird.

Dies hat den Vorteil, dass unabhängig von unterschiedlichen Kraftstoffqualitäten, Kraftstoffsorten, Alterungen, Umwelteinflüssen oder Toleranzen die Verbrennung in einem Arbeitszylinder in einem Arbeitszyklus, die ggf. mehrere Einzelverbrennungen pro Arbeitstakt umfasst, immer gleich eingestellt wird, so dass die Einflüsse von unterschiedlichen Kraftstoffqualitäten, Kraftstoffsorten, Alterungen, Umwelteinflüssen oder Toleranzen auf Schadstoffemissionen, Kraftstoffverbrauch und Fahrkomfort minimiert werden.

Eine besonders gut steuerbare Verbrennung erzielt man dadurch, dass der Kraftstoff in den mindestens einen Arbeitszylinder eingespritzt wird.

Eine besonders gute Einstellung der Verbrennung auf die jeweilige Kraftstoffart bzw. Kraftstoffqualität erzielt man dadurch, dass der mindestens eine Parameter zum Zuführen des Kraftstoffes an den mindestens einen Arbeitszylinder mindestens einen Einspritzparameter umfasst.

Eine besonders fein abgestimmte Einstellung der Verbrennung auf die jeweilige Kraftstoffart bzw. Kraftstoffqualität erzielt man dadurch, dass der mindestens eine Einspritzparameter mindestens eine Einspritzmenge einer Einzeleinspritzung für eine Einzelverbrennung in einem Arbeitszyklus eines Arbeitszylinders, eine Einspritzdauer mindestens einer Einzeleinspritzung für eine Einzelverbrennung in einem Arbeitszyklus eines Arbeitszylinders und/oder einen Einspritzbeginn mindestens einer Einzeleinspritzung für eine Einzelverbrennung in einem Arbeitszyklus eines Arbeitszylinders umfasst.

Eine Einzelverbrennungsabstimmung mit besonders guter Abstimmung der Verbrennung auf die jeweilige Kraftstoffart bzw. Kraftstoffqualität erzielt man dadurch, dass die Einzeleinspritzung mindestens eine Voreinspritzung, mindestens eine Haupteinspritzung oder mindestens eine Nacheinspritzung oder eine Kombination von mindestens zwei dieser umfasst. Hierbei umfasst die Einzelverbrennung beispielsweise mindestens eine Vorverbrennung, mindestens eine Hauptverbrennung oder mindestens eine Nachverbrennung oder eine Kombination von mindestens zwei dieser.

Eine besonders genaue Bestimmung der Kraftstoffart bzw. Kraftstoffqualität erzielt man dadurch, dass mindestens ein Zylinderdrucksignal über mindestens einen Arbeitszyklus in mindestens einem Arbeitszylinder aufgenommen und ausgewertet wird, wobei aus dem Zylinderdrucksignal mindestens ein Merkmal einer Einzelverbrennung bestimmt wird und aus dem mindestens einen Merkmal der Einzelverbrennung die Kraftstoffart und/oder die Kraftstoffqualität bestimmt wird. Hierbei umfasst das mindestens eine Merkmal einer Einzelverbrennung einen Energieumsatz mindestens einer Einzelverbrennung, eine Lage mindestens einer Einzelverbrennung oder einen Zündverzug mindestens einer Einzelverbrennung oder eine Kombination von wenigstens zwei dieser.

Eine besonders schnelle Einstellung der Verbrennung auf die jeweilige Kraftstoffart bzw. Kraftstoffqualität erzielt man dadurch, dass der mindestens eine Parameter zum Zuführen des Kraftstoffes anhand eines Kennfeldes, Parameters und/oder Datenraumes gewählt wird.

Zum genauen Einstellen der Verbrennung auf die jeweilige Kraftstoffart bzw. Kraftstoffqualität ist für jede Kraftstoffart bzw. Kraftstoffqualität ein eigenes Kennfeld, ein eigener Parameter und/oder ein eigener Datenraum für den mindestens einen Parameter zum Zuführen des Kraftstoffes abgelegt.

Eine Einstellung der Verbrennung auch für Gemische aus verschiedenen Kraftstoffarten bzw. Kraftstoffqualitäten erzielt man dadurch, dass für den Fall, dass ein Gemisch aus mindestens zwei Kraftstoffarten bzw. Kraftstoffqualitäten bestimmt wurde, der mindestens eine Parameter zum Zuführen des Kraftstoffes aus den jeweiligen Werten in den jeweiligen Kennfeldern, Parametern und/oder Datenräumen der in dem Gemisch vorhandenen Kraftstoffarten bzw. Kraftstoffqualitäten interpoliert wird.

Um nichtlineare Einflüsse der Kraftstoffart bzw. Kraftstoffqualität auf die Verbrennung zu berücksichtigen, sind mindestens zwei Kennfelder für mindestens einen Parameter zum Zuführen einer bestimmten Kraftstoffart bzw. Kraftstoffqualität für mindestens zwei Anteile dieser Kraftstoffart bzw. Kraftstoffqualität in einem Gemisch vorgesehen.

Eine weitere Verbesserung der Einstellung der Verbrennung für eine jeweilige Kraftstoffart und/oder Kraftstoffqualität erzielt man dadurch, dass zusätzlich mindestens ein Parameter für die Einstellung eines Luftsystems der Brennkraftmaschine zum Zuführen von Verbrennungsluft an den mindestens einen Arbeitszylinder in Abhängigkeit von der bestimmten Kraftstoffart und/oder Kraftstoffqualität verändert wird.

Zur möglichst genauen Einstellung der Verbrennung auf die jeweilige Kraftstoffart bzw. Kraftstoffqualität ist für mindestens einen Parameter für die Einstellung eines Luftsystems der Brennkraftmaschine zum Zuführen von Verbrennungsluft an den mindestens einen Arbeitszylinder mindestens ein Sollwertkennfeld für mindestens eine Kraftstoffart bzw. Kraftstoffqualität abgelegt.

Eine besonders gute Einstellung der Verbrennung für eine jeweilige Kraftstoffart und/oder Kraftstoffqualität erzielt man dadurch, dass der mindestens eine Parameter für die Einstellung eines Luftsystems der Brennkraftmaschine zum Zuführen von Verbrennungsluft an den mindestens einen Arbeitszylinder einen Ladedruck, eine Luftmasse, einen Lambdawert, eine Abgasrückführrate oder eine Kombination von mindestens zwei dieser umfasst.

Zweckmäßigerweise umfasst die Kraftstoffart Diesel, Benzin, Naphtha, Biodiesel, Biokraftstoff oder ein Gemisch von mindestens zwei dieser.

In einer bevorzugten Ausführungsform umfasst die Kraftstoffqualität eine Dichte des Kraftstoffes bzw. Kraftstoffgemisches, einen Heizwert des Kraftstoffes bzw. Kraftstoffgemisches oder eine Kombination von wenigstens zwei dieser.

Eine besonders einfaches Verfahren, welches in bereits bestehende Systeme nachträglich implementiert werden kann erzielt man dadurch, das die Kraftstoffart und/oder Kraftstoffqualität des momentan zugeführten Kraftstoffes mittels eines Kraftstoffsensors bestimmt wird.

Die Erfindung wird im Folgenden näher erläutert.

Das erfindungsgemäße Verfahren dient zum Betreiben einer Brennkraftmaschine mit verschiedenen Kraftstoffarten, wie beispielsweise Diesel oder Naphtha, bzw. Kraftstoffqualitäten, die sich daraus ergeben, dass mindestens zwei Kraftstoffarten miteinander gemischt sind.

Bei dem erfindungsgemäßen Verfahren zum Betreiben einer Brennkraftmaschine wird auf die Einzelverbrennungen innerhalb eines Arbeitszyklus abgestellt. Beispielsweise bei einem 4-Takt-Ottomotor oder einer Dieselbrennkraftmaschine umfasst ein Arbeitszyklus in einem Arbeitszylinder einen Ansaugtakt, einen Verdichtungstakt, einen Arbeitstakt und einen Ladungswechseltakt. Diese vier Takte eines thermodynamischen Prozesses werden in jedem Arbeitszylinder zyklisch wiederholt und auf diese Weise leistet die Brennkraftmasche bzw. der Motor mechanische Arbeit. In dem Arbeitstakt wird die Arbeit durch einen Verbrennungsvorgang geleistet, bei dem ein Gemisch aus Kraftstoff, Verbrennungsluft und ggf. rückgeführtem Abgas im Brennraum des Arbeitszylinders gezündet wird. Ein entsprechend erzeugter Zylinderinnendruck wirkt auf einen in axialer Richtung des Arbeitszylinder hin und her bewegbaren Kolben, der über eine Pleuelstange eine Kurbelwelle drehend antreibt. Die Umdrehung der Kurbelwelle definiert einen Kurbelwinkel (KW). Jeder Arbeitszyklus bewegt die Kurbelwelle um einen vorbestimmten Winkel und der Verbrennungsvorgang bzw. der Arbeitstakt erfolgt über einen vorbestimmten Kurbelwinkel. Üblicherweise dreht ein vollständige Arbeitszyklus die Kurbelwelle um 720°. Aller Vorgänge innerhalb eines Arbeitszyklus werden dementsprechend auf einen Kurbelwinkel zwischen 0° KW und 720° KW bezogen. Dies schafft einen zeitlichen Bezug der Ereignisse eines Arbeitszyklus relativ zueinander.

Um die Verbrennung in dem Arbeitstakt zu initialisieren, erfolgt eine Einspritzung von Kraftstoff in den Brennraum eines jeden Arbeitszylinders. Um mehrere Einzelverbrennungen in einem Arbeitstakt eines Arbeitszyklus zu erhalten, erfolgen dementsprechend mehrere Einspritzvorgänge für Kraftstoff, die um entsprechende Kurbelwinkel voneinander beabstandet sind. Beginn und Ende der Einspitzungen erfolgen jeweils bei einem bestimmten Kurbelwinkel. Dementsprechend ergeben sich um entsprechende Kurbelwinkel voneinander zeitlich versetzte Einzelverbrennungen innerhalb eines Arbeitszyklus bzw. eines Arbeitstaktes.

Beispielsweise erfolgen innerhalb eines Arbeitszyklus in einem Arbeitszylinder mindestens eine Voreinspritzung, mindestens eine Haupteinspritzung und mindestens eine Nacheinspritzung, die um vorbestimmte Kurbelwinkel voneinander getrennt erfolgen, so dass sich in diesem Arbeitszylinder für jeden Arbeitszyklus dementsprechend mehrere Einzelverbrennungen ergeben, nämlich mindestens eine Vorverbrennung, mindestens eine Hauptverbrennung und mindestens eine Nachverbrennung.

Gemäß einer beispielhaften Ausführungsform wird ein Zylinderdrucksignal in mindestens einem Arbeitszylinder der Brennkraftmaschine gemessen. Das Zylinderdrucksignal wird in Echtzeit auf einem Steuergerät ausgewertet. Als Ergebnis werden beispielsweise folgende Merkmale aus dem Zylinderdrucksignal ermittelt: Energieumsatz einer Einzelverbrennungen, Lage einer Einzelverbrennung und/oder Zündverzüge einer Einzelverbrennung, wobei sich der Begriff "Einzelverbrennung" auf einen Arbeitszyklus bezieht. Mit Hilfe dieser Größen und ggf. der Verknüpfung anderer physikalischer Größen aus einem Luftsystem der Brennkraftmaschine und von Umgebungsbedingungen kann darüber auf die Kraftstoffqualität bzw. Kraftstoffart geschlossen werden, die im Motor verbrannt wurde. Anschließend erfolgt auf Basis dieser Kraftstoffqualitätsbestimmung bzw. Kraftstoffartbestimmung eine Beeinflussung von mindestens einem Einspritzparameter, wie beispielsweise Einzeleinspritzmenge oder Einzel-Ansteuerdauer (Vor-, Haupt- und Nacheinspritzungen) sowie Ansteuerbeginn mindestens einer Einzeleinspritzung, um den Einfluss der Kraftstoffqualität bzw. der Kraftstoffart auf die Verbrennung zu berücksichtigen und möglichst gut zu kompensieren. Für die Änderung dieser Einspritzparameter in Abhängigkeit von der gemessenen/bestimmten Kraftstoffqualität bzw. Kraftstoffart können mehrere Verfahren eingesetzt werden.

Möchte man beispielsweise einen Verbrennungsmotor nur für Naphtha und Diesel freigeben, so können Kennfelder oder Parameter oder Datenräume für die Einspritzparameter einmal für Diesel und einmal für Naphtha abgelegt werden. Hierin wird der Begriff "Kennfeld" für jede Art der Zuordnung von zwei, drei oder mehr Parametern in zwei, drei oder mehr Dimensionen verwendet, d.h. dieser Begriff ist nicht auf die zweidimensionale Zuordnung von zwei Parametern beschränkt. Je nach der ermittelten Kraftstoffqualität für ein Diesel-Naphtha-Gemisch wird dann zwischen den beiden Kennfeldern für die Einspritzparameter interpoliert. Optional sind auch mehrere Kennfelder, Parameter und/oder Datenräume für die einzelnen Einspritzparameter vorgesehen, um einen stark nichtlinearen Einfluss der Kraftstoffqualität auf die Verbrennung zu kompensieren. Außerdem ist optional zusätzlich noch ein Einfluss auf Sollkennfelder für eine Regelung eines Luftsystems der Brennkraftmaschine zum Zuführen von Verbrennungsluft an Arbeitszylinder in Abhängigkeit von der verwendeten Kraftstoffqualität vorgesehen. Dabei sind beispielsweise mehrere Sollwertkennfelder für den Ladedruck, Luftmasse, Lambda, AGR-Raten usw. in Abhängigkeit von der gemessenen Kraftstoffqualität im Steuergerät abgelegt.

Der oben beschriebene Ansatz zur Beeinflussung der Einspritzparameter und der Sollwerte für die Luftsystemregelung werden alternativ gemäß einer anderen Ausführungsform mit Hilfe der Messung der Kraftstoffqualität mittels eines Kraftstoffsensors durchgeführt, der ersatzweise für einen Zylinderdrucksensor vorgesehen ist.

Mit dem erfindungsgemäß Verfahren ist zumindest mit der Auswertung des Zylinderdruckes eine echte Regelung der Verbrennung und vor allem des Momentes möglich. So können beispielsweise Unterschiede in der Kraftstoffdichte oder des Kraftstoff-Heizwertes ausgeglichen werden. Außerdem ist eine Kombination von Ansätzen aus Einzelverbrennungsregelung und Einspritzparametersteuerung ebenfalls möglich.

## Patentansprüche

1. Verfahren zum Betreiben einer Brennkraftmaschine mit mindestens einem Arbeitszylinder, insbesondere eines Dieselmotors, wobei dem mindestens einen Arbeitszylinder Kraftstoff zugeführt wird, sowie eine Kraftstoffart und/oder eine Kraftstoffqualität des momentan zugeführten Kraftstoffes bestimmt wird, **dadurch gekennzeichnet, dass** in Abhängigkeit von der bestimmten Kraftstoffart und/oder Kraftstoffqualität mindestens ein Parameter zum Zuführen des Kraftstoffes verändert wird.

2. Verfahren nach Anspruch 1, **dadurch gekennzeichnet, dass** der Kraftstoff in den mindestens einen Arbeitszylinder eingespritzt wird.

3. Verfahren nach mindestens einem der vorhergehenden Ansprüche, **dadurch gekennzeichnet, dass** der mindestens eine Parameter zum Zuführen des Kraftstoffes an den mindestens einen Arbeitszylinder mindestens einen Einspritzparameter umfasst.

4. Verfahren nach Anspruch 3, **dadurch gekennzeichnet, dass** der mindestens eine Einspritzparameter eine Einspritzmenge mindestens einer Einzeleinspritzung für eine Einzelverbrennung in einem Arbeitszyklus eines Arbeitszylinders, eine Einspritzdauer mindestens einer Einzeleinspritzung für eine Einzelverbrennung in einem Arbeitszyklus eines Arbeitszylinders und/oder einen Einspritzbeginn mindestens einer Einzeleinspritzung für eine Einzelverbrennung in einem Arbeitszyklus eines Arbeitszylinders umfasst.

5. Verfahren nach Anspruch 4, **dadurch gekennzeichnet, dass** die Einzeleinspritzung mindestens eine Voreinspritzung, mindestens eine Haupteinspritzung oder mindestens eine Nacheinspritzung oder eine Kombination von mindestens zwei dieser umfasst.

6. Verfahren nach Anspruch 4 oder 5, **dadurch gekennzeichnet, dass** die Einzelverbrennung mindestens eine Vorverbrennung, mindestens eine Hauptverbrennung oder mindestens eine Nachverbrennung oder eine Kombination von mindestens zwei dieser umfasst.

7. Verfahren nach mindestens einem der vorhergehenden Ansprüche, **dadurch gekennzeichnet, dass** mindestens ein Zylinderdrucksignal über mindestens einen Arbeitszyklus in mindestens einem Arbeitszylinder aufgenommen und ausgewertet wird, wobei aus dem Zylinderdrucksignal mindestens ein Merkmal einer Einzelverbrennung bestimmt wird und aus dem mindestens einen Merkmal der Einzelverbrennung die Kraftstoffart und/oder die Kraftstoffqualität bestimmt wird.

8. Verfahren nach Anspruch 7, **dadurch gekennzeichnet, dass** das mindestens eine Merkmal einer Einzelverbrennung einen Energieumsatz mindestens einer Einzelverbrennung, eine Lage mindestens einer Einzelverbrennung oder einen Zündverzug mindestens einer Einzelverbrennung oder eine Kombination von wenigstens zwei dieser umfasst.

9. Verfahren nach mindestens einem der vorhergehenden Ansprüche, **dadurch gekennzeichnet, dass** der mindestens eine Parameter zum Zuführen des Kraftstoffes anhand eines Kennfeldes, Parameters und/oder Datenraumes gewählt wird.

10. Verfahren nach Anspruch 9, **dadurch gekennzeichnet, dass** für jede Kraftstoffart bzw. Kraftstoffqualität ein eigenes Kennfeld, ein eigener Parameter und/oder ein eigener Datenraum für den mindestens einen Parameter zum Zuführen des Kraftstoffes abgelegt ist.

11. Verfahren nach Anspruch 10, **dadurch gekennzeichnet, dass** für den Fall, dass ein Gemisch aus mindestens zwei Kraftstoffarten bzw. Kraftstoffqualitäten bestimmt wurde, der mindestens eine Parameter zum Zuführen des Kraftstoffes aus den jeweiligen Werten in den jeweiligen Kennfeldern, Parametern und/oder Datenräumen der in dem Gemisch vorhandenen Kraftstoffarten bzw. Kraftstoffqualitäten interpoliert wird.

12. Verfahren nach Anspruch 10 oder 11, **dadurch gekennzeichnet, dass** mindestens zwei Kennfelder für mindestens einen Parameter zum Zuführen einer bestimmten Kraftstoffart bzw. Kraftstoffqualität für mindestens zwei Anteile dieser Kraftstoffart bzw. Kraftstoffqualität in einem Gemisch vorgesehen sind.

13. Verfahren nach mindestens einem der vorhergehenden Ansprüche, **dadurch gekennzeichnet, dass** zusätzlich mindestens ein Parameter für die Einstellung eines Luftsystems der Brennkraftmaschine zum Zuführen von Verbrennungsluft an den mindestens einen Arbeitszylinder in Abhängigkeit von der bestimmten Kraftstoffart und/oder Kraftstoffqualität verändert wird.

14. Verfahren nach Anspruch 13, **dadurch gekennzeichnet, dass** für mindestens einen Parameter für die Einstellung eines Luftsystems der Brennkraftmaschine zum Zuführen von Verbrennungsluft an den mindestens einen Arbeitszylinder mindestens ein Sollwertkennfeld für mindestens eine Kraftstoffart bzw. Kraftstoffqualität abgelegt ist.

15. Verfahren nach Anspruch 13 oder 14, **dadurch gekennzeichnet, dass** der mindestens eine Parameter für die Einstellung eines Luftsystems der Brennkraftmaschine zum Zuführen von Verbrennungsluft an den mindestens einen Arbeitszylinder einen Ladedruck, eine Luftmasse, einen Lambdawert, eine Abgasrückführrate oder eine Kombination von mindestens zwei dieser umfasst.

16. Verfahren nach mindestens einem der vorhergehenden Ansprüche, **dadurch gekennzeichnet, dass** die Kraftstoffqualität eine Dichte des Kraftstoffes bzw. Kraftstoffgemisches, einen Heizwert des Kraftstoffes bzw. Kraftstoffgemisches oder eine Kombination von wenigstens zwei dieser umfasst.

17. Verfahren nach mindestens einem der vorhergehenden Ansprüche, **dadurch gekennzeichnet, dass** die Kraftstoffart und/oder Kraftstoffqualität des momentan zugeführten Kraftstoffes mittels eines Kraftstoffsensors bestimmt wird.
